(19) Europäisches Patentamt

European Patent Office

Office européen des brevets

(11) **EP 0 636 502 B1**

(12) **EUROPEAN PATENT SPECIFICATION**

(45) Date of publication and mention
of the grant of the patent:
**02.04.1997 Bulletin 1997/14**

(51) Int. Cl.$^6$: **B60C 23/04**

(21) Application number: **94111871.3**

(22) Date of filing: **29.07.1994**

(54) **Air pressure sensor for tire and method of production thereof**

Reifendrucksensor und Verfahren zu seiner Herstellung

Capteur de pression de l'air du pneu et méthode pour sa fabrication

(84) Designated Contracting States:
**DE FR GB IT**

(30) Priority: **29.07.1993 JP 188258/93**
**18.07.1994 JP 165398/94**
**25.07.1994 JP 172945/94**

(43) Date of publication of application:
**01.02.1995 Bulletin 1995/05**

(73) Proprietor: **BRIDGESTONE CORPORATION**
**Tokyo 104 (JP)**

(72) Inventor: **Toyofuku, Masanobu**
**Kodaira-shi, Tokyo (JP)**

(74) Representative: **Görg, Klaus, Dipl.-Ing. et al**
**Hoffmann, Eitle & Partner,**
**Patent- und Rechtsanwälte,**
**Arabellastrasse 4**
**81925 München (DE)**

(56) References cited:
**EP-A- 0 020 809**      **WO-A-91/01896**
**FR-A- 2 461 248**

## Description

### FIELD OF THE INVENTION

The present invention relates to an air pressure sensor, and more particularly to an air pressure sensor for a tire used in an internal-pressure warning device for detecting a decrease in the air pressure of a tire and for warning the driver of the decrease when the air pressure of the tire has dropped below a predetermined value while the vehicle is travelling, and to a method of producing the air pressure sensor.

### RELATED ART

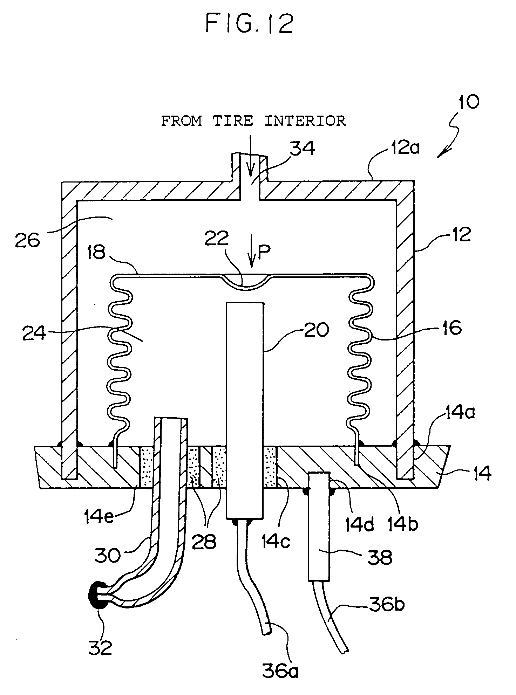

A conventional air pressure sensor 10 for a tire will be described with reference to Fig. 12. A circular groove 14a is formed in a metal base 14, and a substantially hollow cylindrical casing 12 with a bottom is fitted and soldered in this groove 14a, thereby forming a housing. A bellows-type diaphragm 16, which is formed of an electrically conductive resilient thin film, is fixed in a groove 14b by means of soldering. The groove 14b has a smaller diameter than the groove 14a formed in the inner surface of the metal base 14, and is arranged concentrically with the groove 14a. A diaphragm 18, which is formed of an electrically conductive resilient thin film, is connected to the top of the bellows-type diaphragm 16. A movable electrode is formed by the bellows-type diaphragm 16 and the diaphragm 18. An airtight chamber 26, which is formed by the diaphragm 18, the bellows-type diaphragm 16, and the casing 12, communicates with the air chamber of the tire by means of a communicating hole 34 provided in a substantially central portion of a flat surface 12a of the casing 12 which opposes the metal base 14. In addition, a hole 14c is formed in a substantially central portion of the metal base 14. An electrically conductive contact rod 20 of a cylindrical shape is inserted through the hole 14c into a back pressure chamber 24 which is formed by the metal base 14, the diaphragm 18, and the bellows-type diaphragm 16. The contact rod 20 is fixed and sealed to the metal base 14 by a hermetic seal 28. A relay wire 36a is soldered to the end of the contact rod 20 which is located outside the sensor, and is connected to an unillustrated printed circuit board. A cylindrical electrode 38 has one end fitted in and soldered to a cylindrical recess 14d provided in an outer surface of the metal base 14, while a relay wire 36b is soldered to the other end of the electrode 38. The relay wire 36b is connected to the printed circuit board. A substantially hemispherical projection 22 is formed in the diaphragm 18 in such a manner as to project toward the back pressure chamber 24 at a position substantially directly above the contact rod 20. Normally, this projection 22 and the contact rod 20 contact each other, so that the circuit is on. Also formed in the metal base 14 is a hole 14e through which a back-pressure injection pipe 30 is inserted. The back-pressure injection pipe 30 is inserted through the hole 14e into the back pressure chamber 24, and is fixed and sealed by the hermetic seal 28. After a gas is injected through the back-pressure injection pipe 30 to set the internal pressure of the back pressure chamber 24 to a predetermined pressure, an end of this back-pressure injection pipe 30 which is located outside the sensor is crimped, soldered and sealed, as indicated by reference numeral 32 in Fig. 12.

In this air pressure sensor 10, since the internal pressure of the airtight chamber 26 communicating with the air chamber of the tire is normally higher than the internal pressure of the back pressure chamber 24, the movable electrode formed by the bellows-type diaphragm 16 and the diaphragm 18 is subjected to a force acting in a contracting direction (in the direction of arrow P), so that the projection 22 of the diaphragm 18 and the contact rod 20 are in contact with each other. In the event that the air pressure of the tire has dropped below a predetermined value, the internal pressure of the airtight chamber 26 decreases with the drop in the air pressure of the tire. Hence, the bellows-type diaphragm 16 pushes the diaphragm 18 upward toward the flat surface 12a of the casing 12, with the result that the projection 22 and the contact rod 20 cease to contact each other, thereby allowing the drop in the air pressure of the tire to be detected.

However, with the sensor arranged as described above, since the electrode constituting a pressure switch is connected to the printed circuit board by means of the relay wire, the number of component parts used increases disadvantageously and the number of production processes increases, resulting in higher production cost. Furthermore, the reliability of the sensor declines due to faulty connection and the like of the relay wire.

A further air pressure sensor is known from WO-A-91/01896.

### SUMMARY OF THE INVENTION

An object of the present invention is to provide an air pressure sensor for a tire which exhibits excellent performance as no relay wire is used therein.

Another object of the present invention is to provide an air pressure sensor for a tire which is made compact due to a reduction in the number of component parts used.

Still another object of the present invention is to provide an air pressure sensor for a tire which can be produced at low cost.

The air pressure sensor for a tire in accordance with the present invention is defined in claim 1.

In accordance with the air pressure sensor for a tire, the fixed electrode is electrically connected directly to the conductor of the circuit board, and the coil constituting the resonance circuit is also electrically connected to this conductor. The movable electrode is set in a state of contact or noncontact with the fixed electrode due to a change in the internal pressure of the tire. The resonance frequency of the resonance circuit changes due to the presence or absence of contact between the fixed electrode and the movable electrode. As a result, the change in the internal pressure of the tire is detected.

Thus, since the fixed electrode is electrically connected directly to the conductor of the circuit board, a lead wire which is conventionally used between the fixed electrode and the circuit board is eliminated, so that it is possible to prevent the occurrence of failures due to the faulty connection and the like of the lead wire, and to improve the reliability of the sensor. In addition, since the lead wire is not used, the number of component parts is reduced, so that it is possible to make the sensor compact and reduce the cost of the sensor.

In the above-described air pressure sensor for a tire, an embodiment may be provided such that when the internal pressure of the tire is at a predetermined value or higher, the fixed electrode and the movable electrode contact each other, and when the internal pressure of the tire has dropped below the predetermined value, the movable electrode moves and the fixed electrode and the movable electrode are set in the state of noncontact, thereby causing a change in the resonance frequency of the resonance circuit.

In the air pressure sensor for a tire in accordance with the above-described embodiment of the present invention, an arrangement may be provided such that the fixed electrode has an externally threaded structure, and the fixed electrode is threadedly engaged with an internally threaded structure portion formed at a switch housing to which the movable electrode is attached so as to be movable.

In accordance with the air pressure sensor for a tire having such an arrangement, the state of contact or noncontact between the fixed electrode and the movable electrode can be simply adjusted by adjusting the screwing of the fixed electrode into the internally threaded structure portion.

In the air pressure sensor for a tire in accordance with an embodiment of the present invention, a hole into which the fixed electrode is inserted may be formed in the circuit board. In accordance with the air pressure sensor for a tire having such an arrangement, the fixed electrode and the conductor of the circuit board can be electrically connected directly by inserting the fixed electrode into this hole and connecting the fixed electrode and the conductor by means of soldering or the like.

In the air pressure sensor for a tire in accordance with a further embodiment of the present invention, the circuit board may be provided with a conductor having a hole in which the fixed electrode is inserted. In accordance with the air pressure sensor for a tire having such an arrangement, the fixed electrode and the conductor of the circuit board can be electrically connected directly by inserting the fixed electrode into this hole.

The method of producing an air pressure sensor for a tire comprises the steps of:

a) after fixing an expandable movable electrode to a switch housing having an internally threaded structure portion, causing a fixed electrode having an externally threaded structure to threadedly engage with the internally threaded structure portion of the switch housing, disposing one end of the fixed electrode in a space formed by the movable electrode and the switch housing, and positioning the fixed electrode such that the fixed electrode and the movable electrode contact each other when an internal pressure of the tire is at a predetermined value or higher, and such that the fixed electrode and the movable electrode are set in a state of noncontact with each other when the internal pressure of the tire has dropped below the predetermined value;

b) electrically connecting the fixed electrode directly to a conductor of a circuit board to which is electrically connected directly a coil constituting a resonance circuit in which a resonance frequency changes due to the presence or absence of contact between the fixed electrode and the movable electrode; and

c) after at least a portion of the movable electrode, the fixed electrode, the switch housing, the circuit board, and the coil is accommodated in a first housing having an accommodating portion, combining the first housing with a second housing which forms a sensor-accommodating space together with the first housing, and fixing the first housing and the second housing.

In accordance with this method of producing an air pressure sensor for a tire, since it is unnecessary to use a lead wire between the fixed electrode and the circuit board, it is possible to prevent the occurrence of failures due to the faulty connection and the like of the lead wire, and to improve the reliability of the sensor. In addition, since the lead wire is not used, the number of component parts is reduced, so that it is possible to make the sensor compact and reduce the cost thereof. Furthermore, since the step of positioning the fixed electrode is provided in order to adjust the state of contact between the fixed electrode and the movable electrode, before the completion of the air pressure sensor it is possible to confirm whether the fixed electrode and the movable electrode operate properly.

BRIEF DESCRIPTION OF THE DRAWINGS

Fig. 1 is a cross-sectional view of an air pressure sensor for a tire in accordance with a first embodiment of the present invention;

Fig. 2 is a schematic cross-sectional view when the air pressure sensor for a tire in accordance with the first embodiment of the present invention is installed at a vehicle body;

Fig. 3 is a circuit diagram illustrating a resonance circuit constituted by the air pressure sensor in accordance with the first embodiment of the present invention and used in a frequency analysis method;

Fig. 4 is a circuit diagram illustrating a resonance circuit constituted by the air pressure sensor in accordance with the first embodiment of the present invention and used in an amplitude-attenuation analysis method;

Fig. 5 is a cross-sectional view of an air pressure sensor for a tire in accordance with a second embodiment of the present invention;

Fig. 6A is a view, as seen from the sensor cover side, of a printed circuit board of the air pressure sensor for a tire in accordance with the second embodiment of the present invention;

Fig. 6B is a view, as seen from the sensor housing side, of the printed circuit board;

Fig. 7 is a schematic exploded perspective view of the air pressure sensor for a tire in accordance with the second embodiment of the present invention;

Fig. 8 is a schematic diagram of a performance test of the air pressure sensor for a tire in accordance with the second embodiment of the present invention;

Figs. 9 to 11 are graphs illustrating the results of performance tests of the air pressure sensor for a tire in accordance with the second embodiment of the present invention; and

Fig. 12 is a schematic cross-sectional view of a conventional air pressure sensor for a tire.

## DESCRIPTION OF THE PREFERRED EMBODIMENTS

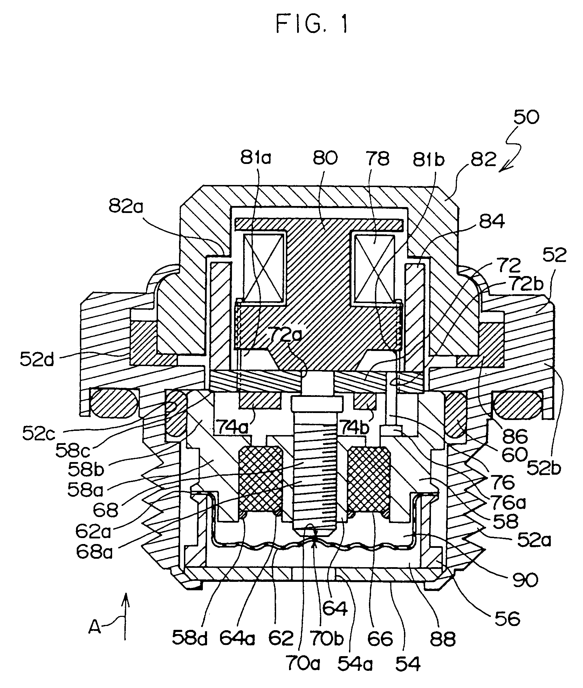

Referring now to Figs. 1 to 4, a description will be given of a first embodiment of the present invention.

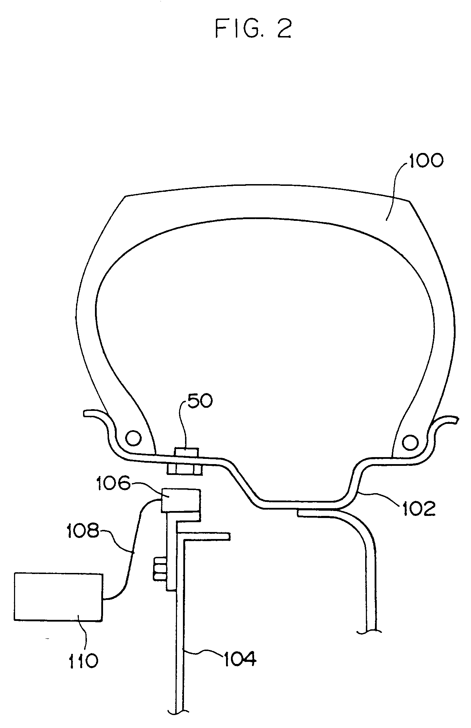

Fig. 2 is a schematic diagram of installation of an air pressure sensor for a tire (hereafter referred to as the air pressure sensor) 50 in accordance with the first embodiment of the present invention.

The air pressure sensor 50 is installed on a rim 102 of a tire 100 by using an unillustrated nut such that a pressure switch is disposed in the interior of the tire. An antenna coil 106 of an internal-pressure warning device is installed on a brake cover 104 of the vehicle body in such a manner as to oppose the air pressure sensor 50. This antenna coil 106 is electrically connected to a transmission/reception unit 110 of the internal-pressure warning device by means of a lead wire 108. The transmission/reception unit 110 causes the antenna coil 106 to radiate electromagnetic waves toward the air pressure sensor 50 and to receive an echo signal transmitted by the air pressure sensor 50, so as to detect an abnormality in the internal pressure of the tire due to a change in the frequency of the echo signal.

A description will be given of the air pressure sensor 50 with reference to Fig. 1.

A sensor housing 52 is comprised of a substantially hollow cylindrical base portion 52a and a substantially hollow cylindrical flange 52b whose diameter is larger than that of the base portion 52a. In addition, a communicating hole 54a for communicating with the air chamber of the tire is formed in a substantially central portion of a circular protection plate 54. A surrounding portion of the protection plate 54 is fixed in an opening of the base portion 52a as a lower end of the base portion 52a is caulked inwardly. A substantially hollow cylindrical sleeve 56 having a diameter substantially identical to that of the protection plate 54 is disposed on the protection plate 54. Disposed on top of the sleeve 56 is a switch housing 58 which is made of stainless steel and is comprised of a substantially hollow cylindrical proximal portion 58a having a larger wall thickness than the sleeve 56 and a distal end portion 58b having a larger diameter than the proximal portion 58a and a smaller wall thickness than the same. The switch housing 58 and the sleeve 56 support the caulking force of the sensor housing 52 with respect to the protection plate 54. An O-ring 60 is interposed between the distal end portion 58b of the switch housing 58 and an annular notch 52c which is formed in an inner peripheral surface of the sensor housing 52 at a position where the inner peripheral surface of the sensor housing 52 opposes the distal end portion 58b. This O-ring 60 provides a hermetic seal with respect to the internal pressure, water, and the like.

A flanged, substantially hollow cylindrical diaphragm 62 with a bottom, which is formed of stainless steel and serves as a movable electrode, has a flange 62a clamped by the sleeve 56 and a portion of an end surface of the proximal portion 58a of the switch housing 58. The flange 62a is fixed and sealed by electron beam welding or the like.

A hollow cylindrical screw guide 64 is disposed inside the proximal portion 58a of the switch housing 58 coaxially therewith while being spaced apart from the inner periphery of the proximal portion 58a such that the outer periphery of the screw guide 64 does not contact the inner periphery of the proximal portion 58a. A substantially hollow cylindrical ceramic 66, i.e., an insulator, is clamped between the screw guide 64 and the proximal portion 58a. Corner portions 58d and 64a between a lower end of the ceramic 66 and an inner peripheral surface of the switch housing 58 and between the lower end of the ceramic 66 and an outer peripheral surface of the screw guide 64 are brazed, so as to fix and seal the ceramic 66. Consequently, an internal thread of the screw guide 64 is aligned with the axis of the air pressure sensor 50. A substantially cylindrical contact screw 68 serving as a fixed electrode is threaded into the screw guide 64, and is adjusted so that a contact 70b (diaphragm side) will be separated from a contact 70a (contact screw side) when the pressure is below a predetermined pressure. A corner portion between a lower end of the screw guide 64 and an outer peripheral surface 68a of the contact screw 68 is soldered. The contact screw 68 and the diaphragm 62 constitute a pressure switch 70.

A hole 72a having a diameter substantially identical to that of the contact screw 68 is formed in a substantially central portion of a circular printed circuit board 72. A proximal end portion of the contact screw 68 is fitted in the hole 72a, and the printed circuit board 72 is fitted in an annular guide groove 58c for positioning the printed circuit board 72, the guide groove 58c being formed above the distal end portion 58b of the switch housing 58. Capacitors 74a and 74b, which constitute a resonance circuit, are fixed and supported on a lower surface of the printed circuit board 72, on the same surface as the surface where the contact screw 68 is disposed. When the printed circuit board 72 is fitted in the guide groove 58c, the capacitors 74a and 74b are disposed in a space formed by the sensor housing 52, the protection plate 54, and the printed circuit board 72. A grounding pin 76, which is substantially cylindrical and is formed of an electrically conductive material, is inserted in a grounding-pin hole 72b formed in the printed circuit board 72, in such a manner as to not contact the capacitors 74a and 74b. A head 76a of the pin 76 abuts against the proximal portion 58a of the switch housing 58. After the printed circuit board 72 is fitted in the guide groove 58c of the switch housing 58, the grounding pin 76 and the contact screw 68 are respectively soldered to the printed wiring on the printed circuit board 72. Accordingly, the energization of the contact 70b is effected from the printed circuit board 72 by means of the contacting pin 76, the switch housing 58, and the diaphragm 62.

A coil bobbin 80, which is formed of a magnetic material such as ferrite, is secured to a surface of the printed circuit board 72 which is opposite to the surface thereof where the capacitors 74a and 74b are fixed and supported, by means of pins 81a and 81b formed of an electrically conductive material. A transmission/reception coil 78 for receiving electromagnetic waves transmitted from a transmission/reception circuit installed on the vehicle body and for generating an echo signal is wound around the coil bobbin 80. One end of the coil 78 is connected to one end of the pin 81a, while the other end of the coil 78 is connected to one end of the pin 81b. The other ends of the pins 81a and 81b are respectively soldered to the printed wiring on the printed circuit board 72. Thus the coil 78 and the printed circuit board 72 are electrically connected to each other. The coil bobbin 80 is covered with a hollow cylindrical resin cap 82 with a bottom, and a rim of the flange 52b of the sensor housing 52 is caulked to the resin cap 82. An annular notch 82a is formed in an inner peripheral surface of the resin cap 82, and a hollow cylindrical ferrite core 84 for assisting electromagnetic coupling is disposed in the space between the antenna coil 106 and the coil 78. In addition, a substantially hollow cylindrical cup gasket 86 for sealing is disposed between the resin cap 82 and an annular notch 52d formed in the inner peripheral surface of the flange 52b of the sensor housing 52.

An airtight chamber 88, which is formed by the protection plate 54, the sleeve 56, and the diaphragm 62 and communicates with the air chamber of the tire through the communicating hole 54a, and an adjustment chamber 90, which is formed by the diaphragm 62 and the switch housing 58, are formed in the air pressure sensor 50 constructed as described above. To maintain a hermetically sealed state between the airtight chamber 88 and the adjustment chamber 90, the respective components are sealed and fixed by means of soldering and brazing, as described above. In addition, the O-ring 60 seals the adjustment chamber 90, while the cup gasket 86 prevents the entry of moisture through the gap between the resin cap 82 and the flange 52b, and provides a hermetic seal and the like for the adjustment chamber 90.

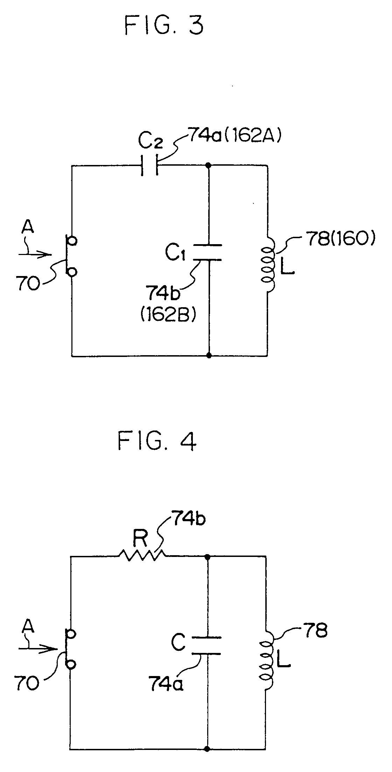

Fig. 3 shows an equivalent circuit of the air pressure sensor 50.

Fig. 3 shows a resonance circuit used in a frequency analysis method. In the resonance circuit for the frequency analysis method, the first capacitor 74b having a capacitance $C_1$ is connected in parallel with the transmission/reception coil 78 having an inductance L. A series circuit comprised of the second capacitor 74a having a capacitance $C_2$ and the pressure switch 70 is connected in parallel with the aforementioned parallel-connected circuit.

Next, a description will be given of the operation of the air pressure sensor 50 in accordance with the first embodiment of the present invention.

As shown in Fig. 1, since the communicating hole 54a provided in the protection plate 54 communicates with the air chamber of the tire, the internal pressure of the airtight chamber 88 is maintained at the same pressure as the internal pressure of the tire. When the internal pressure of the tire is a normal value, the internal pressure of the airtight chamber 88 is higher than the internal pressure of the adjustment chamber 90. In addition, the contact screw 68 and the diaphragm 62 are adjusted such that when the internal pressure of the airtight chamber 88 has dropped below a predetermined value, the contacts 70a and 70b are set in a state of noncontact.

Accordingly, when the internal pressure of the tire is normal, since the internal pressure of the airtight chamber 88 is higher than the internal pressure of the adjustment chamber 90, the diaphragm 62 is subjected to a force acting in the direction of arrow A. Hence, the contacts 70a and 70b contact each other, so that the pressure switch 70 (Fig. 3) is set in an on state.

When the internal pressure of the tire has dropped below the predetermined value, the internal pressure of the airtight chamber 88 also drops in accordance with the decline in the internal pressure of the tire, so that the diaphragm 62 is subjected to a force acting in a direction opposite to the direction of arrow A. Consequently, the contacts 70a and 70b are set in a state of noncontact, so that the pressure switch 70 (Fig. 3) is set in an off state. Hence, there occurs a change in the frequency of an echo signal from the air pressure sensor 50 with respect to electromagnetic waves radiated toward the air pressure sensor 50 from the antenna coil 106 connected to the transmission/reception unit 110 of the tire internal-pressure warning device installed at the vehicle body as shown in Fig. 2. It is therefore possible to detect an abnormality in the internal pressure of the tire.

Referring to Fig. 3, a description will be given of the change in the frequency of the echo signal.

When electromagnetic waves are transmitted toward the coil 78 from the transmission/reception circuit provided at the vehicle body, an echo signal of a resonance frequency is generated. When the air pressure of the tire is at a normal level at a predetermined value or higher, the pressure switch 70 is constantly in the on state. When the internal pressure of the tire drops below the predetermined value, the pressure switch 70 is switched from the on state to the off state. Accordingly, when the internal pressure of the tire is at a normal level, an echo signal of a frequency defined by $f_1 = 1/[2\pi\{L(C_1+C_2)\}^{1/2}]$ is generated, whereas when the internal pressure of the tire drops, an echo signal of a requency defined by $f_2 = 1/\{2\pi(LC_1)^{1/2}\}$ is generated. The echo signal is received by the transmission/reception circuit at the vehicle body, is subjected to frequency-analysis processing, and a normal pressure or a drop in pressure is detected on the basis of the change in the frequency of the echo signal. The values of these circuit elements and the echo signal frequencies can be set, for example, as follows: L = 330 μH, $C_1$ = 1000 pF, $C_2$ = 2200 pF, $f_1 \cong$ 155 kHz, and $f_2 \cong$ 277 kHz.

It should be noted that although, in the above example, a description has been given of a case in which a resonance circuit of the frequency analysis method is used, a resonance circuit of an amplitude-attenuation analysis method shown in Fig. 4 may be used by replacing the capacitor 74b by a resistor.

In the resonance circuit of the amplitude-attenuation analysis method, a series-connected circuit comprised of a resistor R and the pressure switch 70 is connected in parallel with a parallel-connected circuit comprised of the transmission/reception coil 78 having an inductance L and the capacitor 74a having a capacitance C. When the internal pressure of the tire is at a normal level, the pressure switch 70 is constantly in the on state, and the echo signal is a signal having a waveform in which the amplitude is attenuated. Meanwhile, when the internal pressure of the tire drops below a predetermined value, the pressure switch 70 is switched to the off state, and an echo signal in which the amplitude is not attenuated over time is generated. The echo signal is received by the transmission/reception circuit at the vehicle body, is subjected to signal processing, and a normal pressure or a drop in pressure is detected by determining whether the amplitude of the received echo signal attenuates. The values of these circuit elements and the echo signal frequency can be set, for example, as follows: L = 330 μH, C = 3300 pF, R = 1.5 kΩ, and f $\cong$ 152 kHz.

In the air pressure sensor 50 in accordance with this embodiment of the present invention, the contact screw 68 of the pressure switch 70 is fixed directly to the printed circuit board 72 constituting the circuit of the air pressure sensor 50, and is soldered to the printed wiring. For this reason, the lead wire which is conventionally used between the contact screw 68 and the printed circuit board 72 can be eliminated, so that the occurrence of failures such as faulty connection can be prevented, thereby making it possible to improve the reliability of the sensor. In addition, as the lead wire can be eliminated, the distance between the pressure switch 70 and the printed circuit board 72 can be made short, thereby making it possible to make the overall sensor compact. Furthermore, with the air pressure sensor 50 in accordance with the present embodiment, since the screw is used as the contact, there is no decline in the performance of the sensor due to its compact size. Namely, in the present embodiment, since the contact screw 68 is used, the working pressure (the pressure under which the contact 70b is separated from the contact 70a) can be finely adjusted during assembly. With an air pressure sensor which does not have such an adjustment mechanism, the fabrication accuracy such as machining accuracy and assembling accuracy must be increased, which has been a main factor contributing to the large size and higher cost of the sensor. With the air pressure sensor 50, however, since the contact screw 68 is used, fabrication errors can be allowed, the sensor can be made compact, and there is no decline in performance even if the sensor is made compact. In addition, since positioning guides (the screw guide 64 and the guide groove 58c) are provided in the sensor for the contact screw 68 and the printed circuit board 72 respectively, the contact screw 68 and the printed circuit board 72 can be positioned simply and with high accuracy. It should be noted that, with the air pressure sensor 50 of the present embodiment, since the component parts are hermetically sealed by means of soldering, brazing, the O-ring, the cup gasket, and the like, as compared with a case in which hermetic sealing is provided by filling the entire air pressure sensor with a resin, it is possible to make the sensor lightweight, prevent faulty connection due to the thermal expansion or contraction of the resin and disconnection from the housing, and reduce the cost of the air pressure sensor.

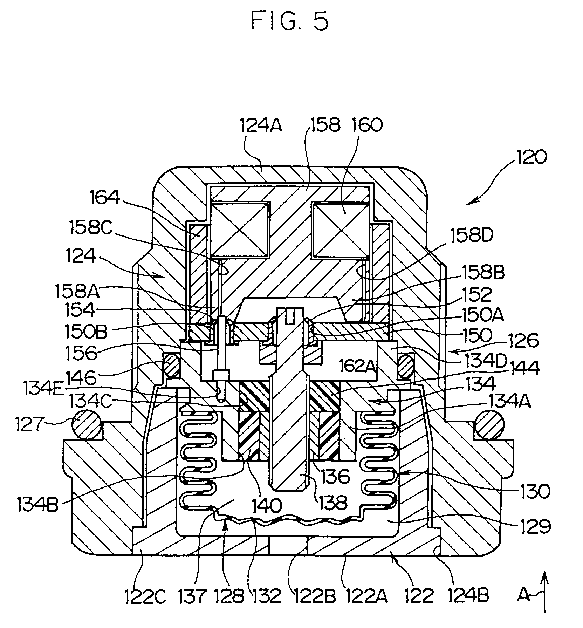

Referring now to Figs. 5 to 8, a description will be given of a second embodiment of the present invention.

As shown in Fig. 5, an air pressure sensor 120 in accordance with the second embodiment of the present invention has a sensor cover 122 and a sensor housing 124. The sensor cover 122 is formed as a hollow cylinder having a bottom, and a communicating passage 122B for allowing the air pressure sensor 120 to communicate with the air chamber of the tire is formed in a substantially central portion of a closed end 122A of the sensor cover 122. In addition, an extending portion 122C extending in the radial direction is formed on an outer periphery of the closed end 122A of the sensor cover 122.

The sensor housing 124 is formed as a substantially hollow cylinder with a bottom and thus has a closed end 124A. A substantially doughnut-shaped notch 124B is formed in the opening side of the sensor housing 124. The extending portion 122C of the sensor cover 122 is disposed and fixed in the notch 124B, thereby forming a substantially hollow cylindrical sensor case 126 and hermetically sealing the interior of the sensor case 126. An O-ring 127 is disposed around the outer periphery of the sensor case 126 for hermetically sealing the interior of the tire when the air pressure sensor 120 is installed on the rim 102 of the tire 100 (Fig. 2).

A movable electrode 128, which is formed of an electrically conductive material, e.g., a metal such as phosphor bronze, is accommodated in the sensor cover 122. The movable electrode 128 is comprised of a bellows 130 which is capable of extending and contracting due to the pressure difference between the internal and external pressures, as well as a diaphragm 132 welded to one end of the bellows 130 by means of electron beam welding or the like. The other end of the bellows 130 is fixed to a switch housing 134 disposed at the opening side of the sensor cover 122, by means of electron beam welding or the like, and is thereby electrically connected to the switch housing 134. In addition, since the bellows 130 is welded to the switch housing 134, a space formed by the movable electrode 128 and the switch housing 134 is hermetically sealed.

The switch housing 134 is formed of an electrically conductive material, e.g., a metal such as stainless steel, and has a substantially disc-shaped configuration. A substantially hollow cylindrical projection 134A is formed on the switch housing 134 concentrically therewith, and this projection 134A is accommodated in the movable electrode 128. Further, a through hole 134C, which has a diameter substantially equal to that of a recess 134B in the projection 134A, is formed in the switch housing 134 concentrically therewith, and is formed continuously with the recess 134B of the projection 134A. A substantially hollow cylindrical insulating portion 140, which is formed of an insulating material such as rubber, is pressure-fitted in the recess 134B of the projection 134A. Furthermore, a substantially hollow cylindrical guide 136, which is formed of an electrically conductive material such as a metal and is a threaded structure portion having an internally threaded structure at its inner periphery, is pressure fitted in the insulating portion 140, and is disposed coaxially therewith. A contact screw 138, which is formed of an electrically conductive material such as a metal and has an externally threaded structure on its outer periphery, is screwed into the guide 136. In addition, a filler material 144, such as a resin, is filled in the space between the through hole 134C and the contact screw 138.

The above-described switch housing 134, together with the movable electrode 128, forms an adjustment chamber 137, while the sensor cover 122, the movable electrode 128, and a portion of the switch housing 134 form an airtight chamber 129. The adjustment chamber 137 normally communicates with the air chamber of the tire by means of the communicating passage 122B of the sensor cover 122, so that the internal pressure of the adjustment chamber 137 is set to be lower than the internal pressure of the airtight chamber 129 which is maintained at the same pressure as the internal pressure of the tire. In addition, the contact screw 138 is positioned as follows: when the internal pressure of the tire is at a predetermined value or higher, the contact screw 138 abuts against the movable electrode 128 which is subjected to a force acting in a contracting direction (in the direction of arrow A). Meanwhile, when the internal pressure of the tire has dropped below the predetermined value, the internal pressure of the airtight chamber 129 also drops in accordance with the decline in the internal pressure of the tire, so that the diaphragm 132 of the movable electrode 128 moves in a direction opposite to the direction of arrow A, thereby allowing the contact screw 138 to be set in a state of noncontact with respect to the movable electrode 128.

In addition, a substantially hollow cylindrical support portion 134D is formed coaxially on a side of the switch housing 134 which is opposite to the side thereof where the projection 134A is formed. A doughnut-shaped O-ring 146 is interposed between the outer peripheral surface of the support portion 134D and the inner peripheral surface of the sensor housing 124, thereby hermetically sealing the airtight chamber 129.

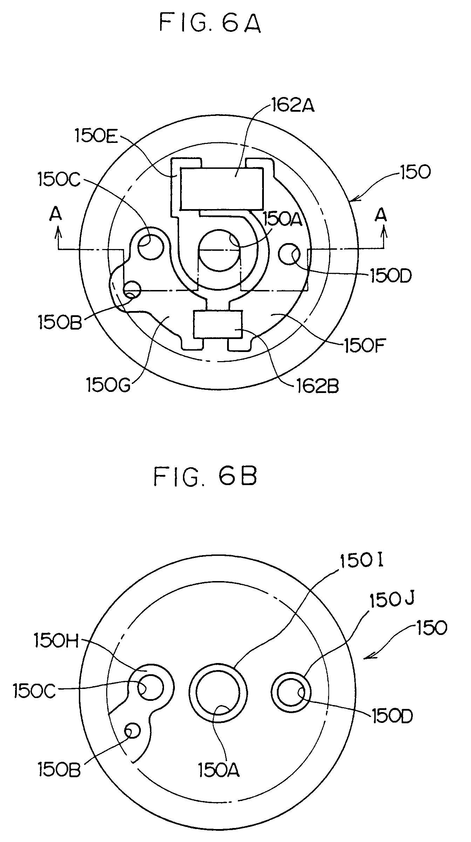

A disc-shaped printed circuit board 150 is disposed on the opening side of the support portion 134D of the switch housing 134. Fig. 6A is a view of the printed circuit board 150 as seen from the sensor cover 122 side, and Fig. 5 is a cross-sectional view taken along line A - A of Fig. 6A. As shown in Fig. 6A, through holes 150A and 150B are formed in a substantially central portion and a peripheral edge portion, respectively, of the printed circuit board 150. As shown in Fig. 5, substantially cylindrical sockets 152 and 154, which constitute portions of the conductors on the circuit board and are formed of an electrically conductive material, are respectively fixed in the through holes 150A and 150B. The other end of the contact screw 138 is inserted in the socket 152, so that the socket 152 and the contact screw 138 contact each other. Further, one end of a substantially rod-shaped grounding pin 156, which is formed of an electrically conductive material and is electrically connected to the switch housing 134, is inserted in the socket 154, the other end of the grounding pin 156 being inserted in a hole 134E with a bottom, which is formed in the switch housing 134 at a position opposing the through hole 150B. Consequently, the socket 154 and the grounding pin 156 contact each other.

As shown in Fig. 6A, through holes 150C and 150D for a coil bobbin are formed in the printed circuit board 150 at opposing positions thereof. As shown in Fig. 5, legs 158A and 158B formed at opposing positions on a coil bobbin 158, which is formed of a magnetic material such as ferrite, are inserted from the sensor housing 124 side, and are fixed in the through holes 150C and 150D. Namely, the coil bobbin 158 is fixed on the printed circuit board 150 by means of the legs 158A and 158B, and is accommodated in a space formed between the printed circuit board 150 and the sensor housing 124. A transmission/reception coil 160 for receiving electromagnetic waves transmitted from the transmission/reception circuit fixed to the vehicle body and for generating an echo signal is wound around the coil bobbin 158.

As shown in Fig. 6A, two capacitors 162A and 162B, which are respectively arranged in the same way as the capacitors 74a and 74b in the first embodiment, are fixed and soldered to the surface of the printed circuit board 150 which faces the sensor cover 122 side.

Conductors 150E, 150F, and 150G are printed on the surface of the printed circuit board 150 which is located at the sensor cover 122 side. The conductor 150E surrounds the through hole 150A, and electrically connects the capacitor 162A and the socket 152 (Fig. 5) fixed in the through hole 150A. The conductor 150F surrounds the through hole 150D, and electrically connects the capacitors 162A and 162B and the leg 158B of the coil bobbin 158 fixed in the through hole 150D. The conductor 150G surrounds the through holes 150B and 150C, and electrically connects the socket 154 (Fig. 5) fixed in the through hole 150B, the leg 158A of the coil bobbin 158 fixed in the through hole 150C, and the capacitor 162B. Fig. 6B is a view of the printed circuit board 150 as seen from the sensor housing 124 side. As shown in Fig. 6B, a conductor 150H surrounds the through holes 150B and 150C, and electrically connects the socket 154 (Fig. 5) fixed in the through hole 150B and the leg 158A of the coil bobbin 158 fixed in the through hole 150C. Furthermore, a conductor 150I, which surrounds the through hole 150A, and a conductor 150J, which surrounds the through hole 150D and contacts the leg 158B of the coil bobbin 158 fixed in the through hole 150D, are respectively printed on the surface of the printed circuit board 150 on the sensor housing 124 side.

The ends of the coil 160 are respectively passed through through holes 158C and 158D formed in the legs 158A and 158B of the coil bobbin 158, and are respectively soldered to the conductors 150H and 150J so as to be electrically connected thereto.

The circuit shown in Fig. 3 is structured as described above. Namely, as shown in Figs. 6A and 6B, the capacitor 162B is electrically connected to one end of the coil 160 (Fig. 5) by means of the conductor 150F, the leg 158B of the coil bobbin 158 fixed in the through hole 150D, and the conductor 150J. Further, this capacitor 162B is electrically connected to the other end of the coil 160 (Fig. 5) by means of the conductor 150G, the leg 158A of the coil bobbin 158 fixed in the through hole 150C, and the conductor 150H. The capacitor 162A is electrically connected to one end of the coil 160 (Fig. 5) and the capacitor 162B by means of the conductor 150F, the leg 158B of the coil bobbin 158 fixed in the through hole 150D, and the conductor 150J. Further, the capacitor 162A is electrically connected to the contact screw 138 shown in Fig. 5, by means of the conductor 150E and the socket 152 (Fig. 5) fixed in the through hole 150A. The contact screw 138 is set in a state of contact or in a state of noncontact with the movable electrode 128 depending on the internal pressure of the tire. In other words, the pressure switch 70 shown in Fig. 3 is formed by the contact screw 138 and the movable electrode 128. In addition, as shown in Fig. 5, the movable electrode 128 is electrically connected to the other end of the coil 160 (Fig. 5) and the capacitor 162B by means of the switch housing 134, the grounding pin 156, the socket 154 fixed in the through hole 150B, the conductor 150G illustrated in Fig. 6, the leg 158A of the coil bobbin 158 fixed in the through hole 150C, and the conductor 150H.

It should be noted that, as shown in Fig. 5, a hollow cylindrical ferrite core 164 may be disposed on the outer side of the coil bobbin 158 in the space between the antenna coil 106 (Fig. 2) and the coil 160 so as to assist electromagnetic coupling.

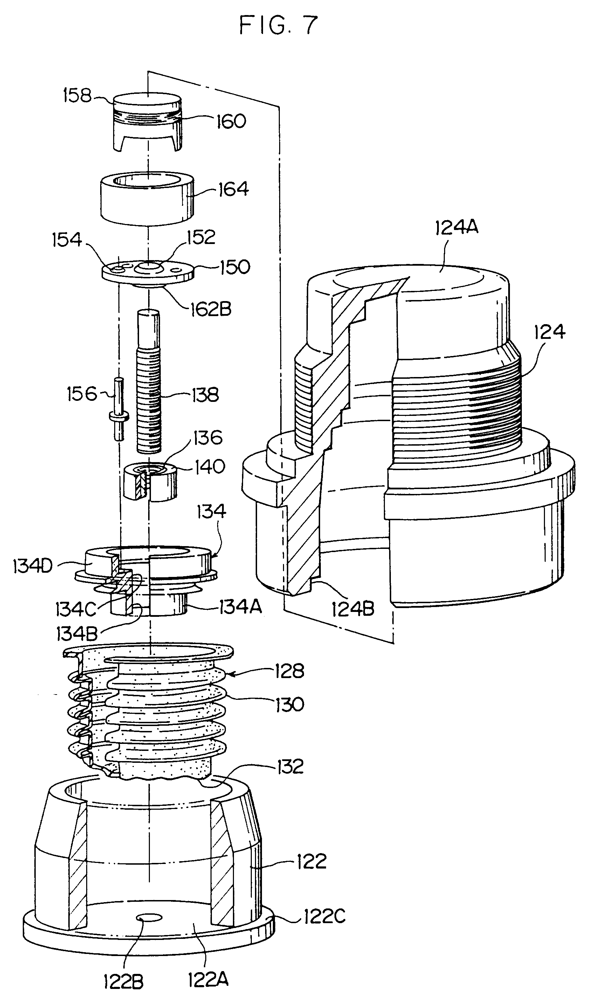

The air pressure sensor 120 arranged as described above can be produced, for example, as follows. Namely, as shown in Fig. 7, the guide 136 is pressure-fitted in the insulating portion 140, and the guide 136 and the insulating portion 140 are pressure-fitted in the recess 134B of the switch housing 134. Next, the movable electrode 128 is electron-beam welded onto the switch housing 134, and the contact screw 138 is screwed into the guide 136, thereby fixing the contact screw 138 to the switch housing 134. At this time, the contact screw 138 is positioned such that the contact screw 138 and the movable electrode 128 contact each other when the internal pressure of the tire is at a predetermined value or higher, and such that the contact screw 138 and the movable electrode 128 are set in a state of noncontact when the internal pressure of the tire has dropped below the predetermined value. Next, the grounding pin 156 is inserted into the switch housing 134, and the filler material 144 is filled in the space between the through hole 134C and the contact screw 138, as shown in Fig. 5.

As shown in Fig. 6, the capacitor 162A is soldered to the conductors 150E and 150F on the printed circuit board 150 in which the sockets 152 and 154 and the like are fixed, while the capacitor 162B is soldered to the conductors 150F and 150G. Further, the coil bobbin 158 (Fig. 5) with the coil 160 wound therearound is fixed to the printed circuit board 150, and the ends of the coil 160 are respectively soldered to the conductors 150H and 150J on the printed circuit board 150. At this time, the ferrite core 164 may be disposed on the printed circuit board 150.

Next, as shown in Fig. 5, the other end of the contact screw 138 and the other end of the grounding pin 156 are inserted into the sockets 152 and 154 respectively. Then, the contact screw 138 and the grounding pin 156 are electrically connected to the conductors 150E, 150G, 150H, and 150I on the surface of the printed circuit board 150 which is opposite to the surface thereof where the coil 160 is connected.

Subsequently, the opening of the sensor housing 124 is made to face upward, silicone is filled in the sensor housing 124 to the extent that the circuit space is filled therewith, and the O-ring 146 is disposed on the inner periphery of the sensor housing 124. The coil 160 and the like are accommodated in the sensor housing 124 in such a manner that the coil 160 is disposed in the sensor housing 124 at the side opposite the opening side of the sensor housing 124. Finally, the sensor cover 122 is placed on the assembly, and the extending portion 122C of the sensor cover 122 and the notch 124B of the sensor housing 124 are hermetically sealed by ultrasonic welding, and if the O-ring 127 is disposed around the outer periphery of the sensor housing 124, the air pressure sensor 120 shown in Fig. 5 is obtained.

Next, a description will be given of the operation of the present embodiment.

As shown in Fig. 5, since the airtight chamber 129 communicates with the air chamber of the tire through the communicating hole 122B provided in the sensor cover 122, the internal pressure of the airtight chamber 129 is maintained at the same pressure as the internal pressure of the tire. When the internal pressure of the tire is a normal value, the internal pressure of the airtight chamber 129 is higher than the internal pressure of the adjustment chamber 137. In addition, the contact screw 138 is positioned such that the contact screw 138 contacts the movable electrode 128 when the internal pressure of the airtight chamber 129 is at a predetermined value or higher, and the contact screw 138 is set in a state of noncontact with the movable electrode 128 when the internal pressure of the airtight chamber 129 has dropped below the predetermined value in accordance with a decrease in the internal pressure of the tire.

Accordingly, when the internal pressure of the tire is normal, since the internal pressure of the airtight chamber 129 is higher than the internal pressure of the adjustment chamber 137, the movable electrode 128 is subjected to a force acting in a contracting direction (in the direction of arrow A) and is in contact with the contact screw 138, so that the pressure switch 70 shown in Fig. 3 is set in an on state.

On the other hand, when the internal pressure of the tire has dropped below the predetermined value, the internal pressure of the airtight chamber 129 also drops in accordance with the decrease in the internal pressure of the tire, so that the diaphragm 130 of the movable electrode 128 moves in a direction opposite to the direction of arrow A (the state shown in Fig. 5). Consequently, the contact screw 138 and the movable electrode 128 are set in a state of noncontact, so that the pressure switch 70 (Fig. 3) is set in an off state.

As a result of the changeover of this pressure switch 70, in the same way as in the first embodiment, there occurs a change in the frequency of an echo signal from the air pressure sensor 120 with respect to electromagnetic waves radiated toward the air pressure sensor 120 from the transmission/reception circuit of the tire internal-pressure warning device installed at the vehicle body, thereby making it possible to detect an abnormality in the internal pressure of the tire.

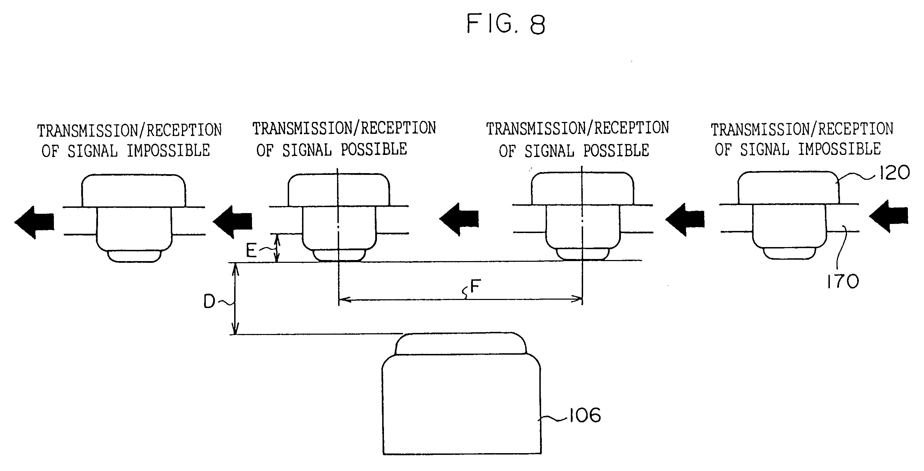

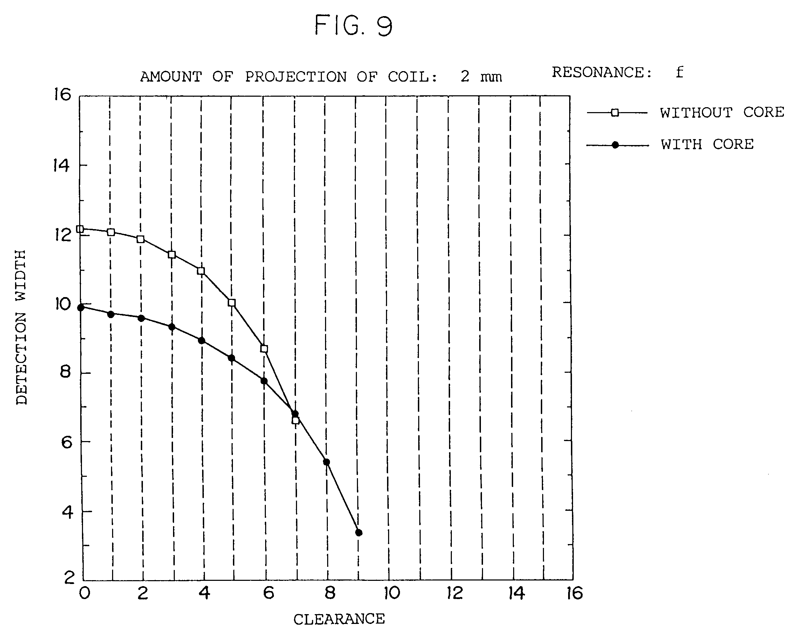

A performance test shown in Fig. 8 was conducted for the air pressure sensor 120. In this performance test, the fixed antenna coil 106 and the air pressure sensor 120 attached to a mounting plate 170, which was movable in the horizontal direction along an unillustrated guide, were used. The detection width was measured by varying the clearance between the air pressure sensor 120 and the antenna coil 106 and the amount of projection of the coil of the air pressure sensor 120. Here, the clearance refers to the distance (D in Fig. 8) between the air pressure sensor 120 and the antenna coil 106 in a direction perpendicular to the direction of movement of the mounting plate 170. The amount of projection of the coil refers to the length (E in Fig. 8) of projection of the air pressure sensor 120 from the mounting plate 170 toward the antenna coil 106. Further, the detection width refers to the width (F in Fig. 8) of the area in which the transmission and reception of signals between the air pressure sensor 120 and the antenna coil 106 are possible. Since a fixed time duration is required in the transmission and reception of signals between the air pressure sensor 120 and the antenna coil 106, the larger the detection width, the higher the speed at which the air pressure sensor 120 can be used, and an evaluation is made that the performance of the air pressure sensor 120 is better. This performance test was conducted for a case in which the ferrite core was used and a case in which the ferrite core was not used. The test results are shown in Figs. 9 to 11. The unit is mm in the respective cases.

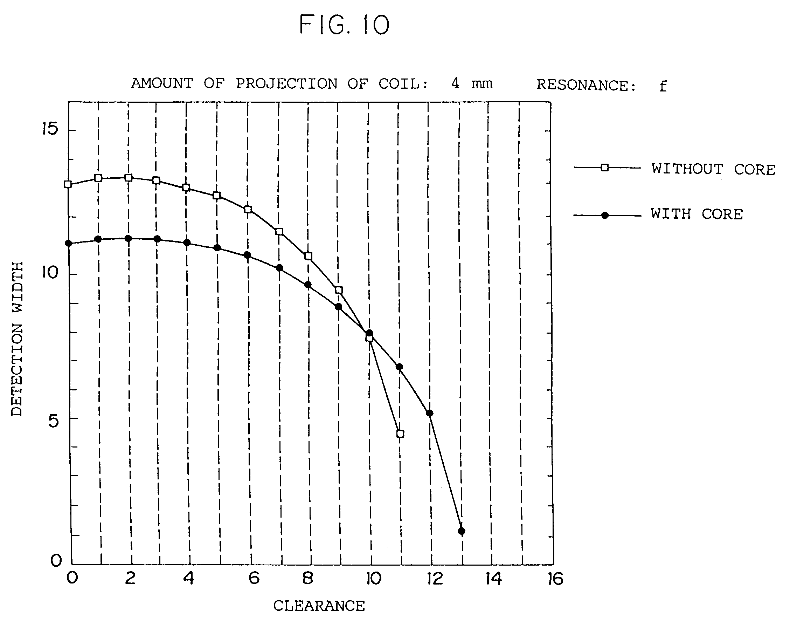

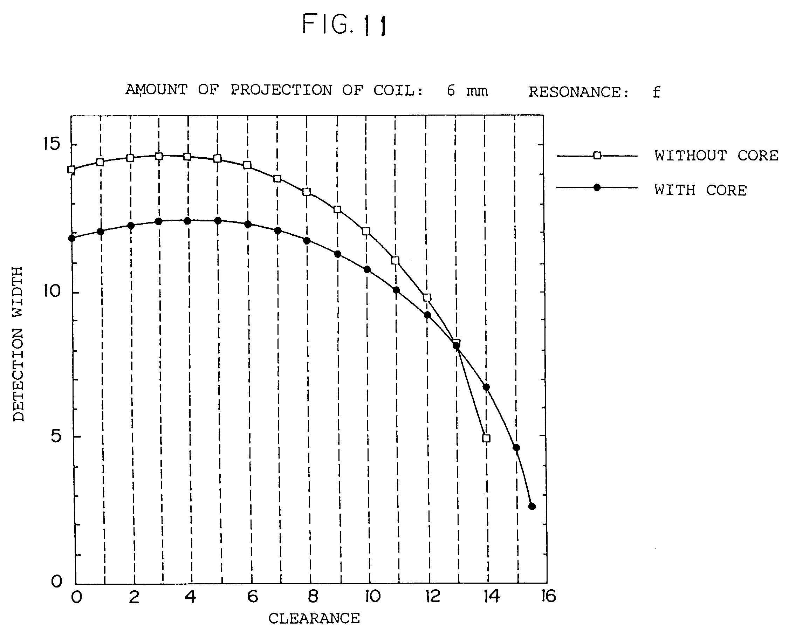

Fig. 9 shows that the smaller the clearance, the larger the detection width. Figs. 10 and 11 show that the detection width reaches a maximum when the clearance is about 2 mm and about 4 mm, respectively. In addition, Fig. 9 shows that the air pressure sensor without the ferrite core results in a large detection width and better performance when the clearance is 7 mm or less in Fig. 9, 10 mm or less in Fig. 10, and 13 mm or less in Fig. 11. Accordingly, in the aforementioned test conditions, it is preferable to use the air pressure sensor without the ferrite core with a clearance of about 7 mm or less. Furthermore, a comparison of Figs. 9 to 11 shows that the larger the amount of projection of the coil, the larger the detection width and the better performance of the air pressure sensor.

As described above, with the air pressure sensor 120 in accordance with the second embodiment, the circuit shown in Fig. 3 can be easily completed by simply inserting the contact screw 138 and the grounding pin 156 into the printed circuit board 150. In other words, the lead wire which is conventionally used between the contact screw 138 and the printed circuit board 150 can be eliminated, so that it is possible to prevent the occurrence of failures due to faulty connection of the lead wire or the like. In addition, the distance between the pressure switch 70 (Fig. 3) and the printed circuit board 150 can be made short thanks to the elimination of the lead wire, thereby making it possible to make the entire air pressure sensor compact and lightweight.

Further, after all the electronic components including the contact screw have been assembled, these components are accommodated in the sensor cover 122 or the sensor housing 124, and the sensor case 126 is formed, with the result that the air pressure sensor 120 can be produced simply. Moreover, the guide 136 for positioning the contact screw 138 is provided in the pressure sensor 120, and the contact screw 138 can be positioned easily by screwing the contact screw 138 into the guide 136. Namely, since the contact screw 138 serves as both a pressure adjusting mechanism and an energizing contact, the state of contact between the contact screw 138 and the movable electrode 128 due to the change in the internal pressure of the airtight chamber 129 can be adjusted easily. Therefore, it is possible to improve the reliability of the air pressure sensor without making further demands on the fabrication accuracy such as the machining accuracy and the assembling accuracy.

Furthermore, since the proper operation of the contact screw 138 and the movable electrode 128 can be confirmed midway during the production of the air pressure sensor 120, the yield can be improved. In addition, since the sensor case 126 can be completed by connecting the extending portion 122C of the sensor cover 122 and the notch 124B of the sensor housing 124, there is only a small number of connected portions, so that leakage of air is unlikely to occur. Hence, it is unnecessary to hermetically seal the entire air pressure sensor 120 with a resin, and it is possible to make the air pressure sensor lightweight, prevent faulty connection due to thermal expansion or contraction of the resin and prevent disconnection from the housing, as well as reduce the cost of the air pressure sensor.

Although, in the above-described second embodiment, a description has been given by citing as an example the air pressure sensor having two capacitors, the circuit shown in Fig. 4 may be structured by replacing one of the capacitors by a resistor.

Although the contact screw is used as the fixed electrode in the above-described first and second embodiments, the fixed electrode is not limited to the contact screw, and it suffices that the fixed electrode is arranged so as to be connected directly to the circuit board and such that positioning thereof is facilitated.

Furthermore, although, in the above-described first and second embodiments, a description has been given by citing as an example an air pressure sensor in which the contact screw and either the diaphragm or the movable electrode are set in a state of noncontact when the internal pressure of the tire drops, the present invention is applicable to an air pressure sensor in which the contact screw and either the diaphragm or the movable electrode are set in a state of contact when the internal pressure of the tire drops.

Although, in the above-described first and second embodiments, a description has been given by citing as an example a case in which the ferrite core is provided, the ferrite core may be omitted if the detection width is larger in the case in which the ferrite core is not provided than in a case in which it is provided, depending on the clearance between the air pressure sensor and the antenna coil and the amount of projection of the coil of the air pressure sensor at a time when the air pressure sensor is actually installed in the tire.

In addition, the contact screws 68 and 138, the diaphragm 62, the movable electrode 128, the switch housings 58 and 134, and the grounding pins 76 and 156 may be formed of a metallic, or organic or inorganic electrically conductive material other than stainless steel and phosphor bronze. Furthermore, the ceramic 66 may be replaced by other organic or inorganic insulating materials. Moreover, insulating bodies such as the insulating portion 140 may formed of an inorganic insulating material, such as ceramic or glass, or an organic insulating material, such as plastic or rubber. Also, the coil bobbins 80 and 158 and the ferrite cores 84 and 164 may be replaced by members formed of a magnetic material other than ferrite.

Reference signs in the claims are intended for better understanding and shall not limit the scope.

**Claims**

1. An air pressure sensor (50, 120) for a tire including a circuit board (72, 150) having a conductor, a fixed electrode (68, 138), a resonance circuit having a coil (78, 160) wound onto a coil bobbin (80, 158) formed of a magnetic material and electrically connected directly to said conductor, and a movable electrode (62, 128) adapted to be set in a state of contact or noncontact with said fixed electrode (68, 138) due to a change in an internal pressure of the tire so as to change a resonance frequency of said resonance circuit,
   **characterized in that** said fixed electrode (68, 138) is electrically connected directly to said conductor; and said coil bobbin (80, 158) is secured to a surface of said circuit board (72, 150).

2. An air pressure sensor (50, 120) for a tire according to Claim 1, wherein when the internal pressure of the tire is at a predetermined value or higher, said fixed electrode (68, 138) and said movable electrode (62, 128) contact each other, and when the internal pressure of the tire has dropped below the predetermined value, said movable electrode (62, 128) moves and said fixed electrode (68, 138) and said movable electrode (62, 128) are set in the state of noncontact, so as to cause a change in the resonance frequency of said resonance circuit.

3. An air pressure sensor (50, 120) for a tire according to Claim 2, wherein said fixed electrode (68, 138) has an externally threaded structure, said fixed electrode (68, 138) is threadedly engaged with an internally threaded structure portion (64, 136) attached to a switch housing (58, 134) to which said movable electrode (62, 128) is attached so as to be movable, and said fixed electrode (68, 138) is electrically connected directly to said conductor of said circuit board (72, 150).

4. An air pressure sensor (50, 120) for a tire according to Claim 1, wherein a hole (72a, 150A) into which said fixed electrode (68, 138) is inserted is formed in said circuit board (72, 150).

5. An air pressure sensor (50, 120) for a tire according to Claim 1, wherein said circuit board (150) is provided with a conductor (152) having a hole into which said fixed electrode (138) is inserted.

6. A method of producing an air pressure sensor (120) for a tire characterised by comprising the steps of:

a) after fixing an expandable movable electrode (128) to a switch housing (134) having an internally threaded structure portion (136), causing a fixed electrode (138) having an externally threaded structure to threadedly engage with said internally threaded structure portion (136), disposing one end of said fixed electrode (138) in a space formed by said movable electrode (128) and said switch housing (134), and positioning said fixed electrode (138) such that said fixed electrode (138) and said movable electrode (128) contact each other when an internal pressure of the tire is at a predetermined value or higher, and such that said fixed electrode (138) and said movable electrode (128) are set in a state of noncontact with each other when the internal pressure of the tire has dropped below the predetermined value;
b) electrically connecting said fixed electrode (138) directly to a conductor of a circuit board (150) to which is electrically connected directly a coil constituting a resonance circuit in which a resonance frequency changes due to the presence or absence of contact between said fixed electrode (138) and said movable electrode (128); and
c) after at least a portion of said movable electrode (128), said fixed electrode (138), said switch housing (134), said circuit board (150), and said coil (160) is accommodated in a first housing (124) having an accommodating portion, combining said first housing (124) with a second housing (122) which forms a sensor-accommodating space together with said first housing (124), and fixing said first housing (124) and said second housing (122).

**Patentansprüche**

1. Luftdrucksensor (50, 120) für einen Reifen, mit einer Schaltplatte (72, 150) mit einem Leiter, einer festen Elektrode (68, 138), einem Resonanzstromkreis mit einer Spule (78, 160), die auf einen Spulenkörper (80, 158) gewunden ist, der aus einem magnetischen Material gebildet ist und elektrisch unmittelbar mit dem Leiter verbunden ist, und mit einer beweglichen Elektrode (62, 128), die derart ausgebildet ist, daß sie infolge einer Veränderung eines Innendrucks des Reifens in einen sich mit der festen Elektrode (68, 138) berührenden oder einen sich nicht berührenden Zustand derart versetzt werden kann, daß sie eine Resonanzfrequenz des Resonanzstromkreises verändert,
dadurch **gekennzeichnet,** daß
die feste Elektrode (68, 138) elektrisch unmittelbar mit dem Leiter verbunden ist; und daß der Spulenkörper (80, 158) an eine Oberfläche der Schaltplatte (72, 150) befestigt ist.

2. Luftdrucksensor (50, 120) für einen Reifen gemäß Anspruch 1,
dadurch **gekennzeichnet,** daß,
wenn der Innendruck des Reifens bei einem vorbestimmten Wert oder höher ist, die feste Elektrode (68, 138) und die bewegliche Elektrode (62, 128) einander berühren, und daß, wenn der Innendruck des Reifens unterhalb den vorbestimmten Wert gefallen ist, sich die bewegliche Elektrode (62, 128) bewegt, und die feste Elektrode (68, 138) und die bewegliche Elektrode (62, 128) in einen sich nicht berührenden Zustand versetzt werden, so daß sie eine Veränderung in der Resonanzfrequenz des Resonanzstromkreises bewirken.

3. Luftdrucksensor (50, 120) für einen Reifen gemäß Anspruch 2,
dadurch **gekennzeichnet,** daß
die feste Elektrode (68, 138) ein Außengewinde aufweist, wobei die feste Elektrode (68, 138) mittels eines Gewindes mit einem Innengewindeabschnitt (64, 136) im Eingriff steht, der an ein Schaltergehäuse (58, 134) angebracht ist, an das die bewegliche Elektrode (62, 138) derart angebracht ist, daß sie beweglich ist, und wobei die feste Elektrode (68, 138) elektrisch unmittelbar mit dem Leiter der Schaltplatte (72, 150) verbunden ist.

4. Luftdrucksensor (50, 120) für einen Reifen gemäß Anspruch 1,
dadurch **gekennzeichnet,** daß
eine Öffnung (72a, 150A), in welche die feste Elektrode eingeführt ist, in der Schaltplatte (72, 150) ausgebildet ist.

5. Luftdrucksensor (50, 120) für einen Reifen gemäß Anspruch 1,

dadurch **gekennzeichnet,** daß
die Schaltplatte (150) mit einem Leiter (152) mit einer Öffnung versehen ist, in welche die feste Elektrode (138) eingeführt ist.

6. Verfahren zur Herstellung eines Luftdrucksensors (120) für einen Reifen,
dadurch **gekennzeichnet,** daß
es die folgenden Schritte aufweist:

a) nach dem Befestigen einer dehnbaren beweglichen Elektrode (128) an ein Schaltergehäuse (134) mit einem Innengewindeabschnitt (136), Veranlassen einer festen Elektrode (138) mit einem Außengewinde mittels eines Gewindes mit dem Innengewindeabschnitt (136) in Eingriff zu kommen, Anordnung eines Endes der festen Elektrode (138) in einem Raum, der durch die bewegliche Elektrode (128) und das Schaltergehäuse (134) gebildet wird, und Anordnung der festen Elektrode (138) derart, daß die feste Elektrode (138) und die bewegliche Elektrode (128) einander berühren, wenn ein Innendruck des Reifens bei einem vorbestimmten Wert oder höher liegt, und derart, daß die feste Elektrode (138) und die bewegliche Elektrode (128) in einen einander nicht berührenden Zustand versetzt werden, wenn der Innendruck des Reifens unterhalb den vorbestimmten Wert gefallen ist;

b) elektrisches Verbinden der festen Elektrode (138) unmittelbar mit einem Leiter der Schaltplatte (150), mit der elektrisch unmittelbar eine Spule verbunden ist, wodurch ein Resonanzstromkreis gebildet wird, bei dem sich eine Resonanzfrequenz infolge der Anwesenheit oder Abwesenheit einer Berührung zwischen der festen Elektrode (138) und der beweglichen Elektrode (128) verändert; und

c) nachdem wenigstens ein Abschnitt der beweglichen Elektrode (128), die feste Elektrode (138), das Schaltergehäuse (134), die Schaltplatte (150) und die Spule (160) in einem ersten Gehäuse (124) mit einem Unterbringungsabschnitt untergebracht sind, Kombinieren des ersten Gehäuses (124) mit dem zweiten Gehäuse (122), das zusammen mit dem ersten Gehäuse (124) einen Raum zur Unterbringung eines Sensors bildet, und Befestigen des ersten Gehäuses (124) und des zweiten Gehäuses (122).

**Revendications**

1. Capteur de préssion d'air (50, 120) pour un pneumatique, comprenant une plaquette de circuits (72, 150) comportant un conducteur, une électrode fixe (68, 138), un circuit résonnant comportant une bobine (78, 160) enroulée sur un mandrin de bobine (80, 158) formé d'un matériau magnétique et connecté électriquement directement audit conducteur, et une électrode mobile (62, 128) apte à être placée dans un état de contact ou d'absence de contact avec ladite électrode fixe (68, 138) en raison d'une variation d'une pression interne du pneumatique de manière à modifier une fréquence de résonance dudit circuit résonnant,
caractérisé en ce que ladite électrode fixe (68, 138) est connectée électriquement directement audit conducteur ; et ledit mandrin de bobine (80, 158) est fixé à une surface de ladite plaquette de circuits (72, 150).

2. Capteur de pression d'air (50, 120) pour un pneumatique selon la revendication 1, dans lequel lorsque la pression interne du pneumatique est égale ou supérieure à une valeur prédéterminée, ladite électrode fixe (68, 138) de ladite électrode mobile (62, 128) sont en contact réciproque, et lorsque la pression interne du pneumatique est tombée au-dessous de la valeur prédéterminée, ladite électrode mobile (62, 128) se déplace et ladite électrode fixe (68, 138) et ladite électrode mobile (62, 128) sont placées dans l'état d'absence de contact, de manière à provoquer une modification de la fréquence de résonance dudit circuit résonnant.

3. Capteur de pression d'air (50, 120) pour un pneumatique selon la revendication 2, dans lequel ladite électrode fixe (68, 138) possède une structure filetée extérieurement, ladite électrode fixe (68, 138) engrène par vissage avec une partie de structure taraudée (64, 136) fixée à un boitier d'interrupteur (58, 134), auquel ladite électrode mobile (62, 128) est fixée de manière à être mobile, et ladite électrode fixe (68, 138) est connectée électriquement directement audit conducteur de ladite plaquette de circuits (72, 150).

4. Capteur de pression d'air (50, 120) pour un pneumatique selon la revendication 1, dans lequel un trou (72a, 150A), dans lequel est inséré ladite électrode fixe (68, 138) est formée dans ladite plaquette de circuits (72, 150).

5. Capteur de pression d'air (50, 120) pour un pneumatique selon la revendication 1, dans lequel ladite plaquette de circuits (150) est équipée d'un conducteur (152) possédant un trou dans lequel ladite électrode fixe (138) est insérée.

6. Procédé de fabrication d'un capteur de pression d'air (120) pour un pneumatique, caractérisé par les étapes consistant à :

a) après fixation d'une électrode mobile expansible (128) sur un boitier d'interrupteur (134) comportant une partie de structure taraudée (136), amener une électrode fixe (138) possédant une structure filetée extérieurement à engrener par vissage avec ladite partie de structure taraudée (136), disposée à une extrémité de ladite électrode fixe (138) dans un espace formé par ladite électrode mobile (128) et ledit boitier d'interrupteur (134), et positionner ladite électrode fixe (138) de telle sorte que ladite électrode fixe (138) et ladite électrode mobile (128) sont en contact réciproque lorsqu'une pression interne du pneumatique est égale ou supérieure à une valeur prédéterminée, et de telle sorte que ladite électrode fixe (138) et ladite électrode mobile (128) sont disposées dans un état d'absence de contact réciproque lorsque la pression interne du pneumatique est tombée au-dessous de la valeur prédéterminée ;

b) connecter électriquement ladite électrode fixe (138) directement à un conducteur d'une plaquette de circuits (150), auquel est directement connectée électriquement une bobine constituant un circuit résonnant, dans lequel une fréquence de résonance varie sous l'effet de la présence ou de l'absence du contact entre ladite électrode fixe (138) et ladite électrode mobile (128), et

c) après qu'au moins une partie de ladite électrode mobile (128), ladite électrode fixe (138), ledit boîtier d'interrupteur (134) et ladite plaquette de circuits (150) et ladite bobine (160) ont été insérés dans un premier boîtier (124) possédant une partie de réception, combiner ledit premier boîtier (124) à un second boîtier (122) qui forme un espace de logement d'un capteur conjointement avec ledit premier boîtier (124) et fixer ledit premier boîtier (124) et ledit second boîtier (122).

# FIG. 1

FIG. 2

FIG. 3

FIG. 4

# FIG. 5

EP 0 636 502 B1

FIG. 6A

FIG. 6B

18

FIG. 7

## FIG. 8

TRANSMISSION/RECEPTION
OF SIGNAL IMPOSSIBLE

TRANSMISSION/RECEPTION
OF SIGNAL POSSIBLE

TRANSMISSION/RECEPTION
OF SIGNAL POSSIBLE

TRANSMISSION/RECEPTION
OF SIGNAL IMPOSSIBLE

EP 0 636 502 B1

FIG. 9

# FIG. 10

AMOUNT OF PROJECTION OF COIL: 4 mm     RESONANCE: f

EP 0 636 502 B1

# FIG. 11

AMOUNT OF PROJECTION OF COIL: 6 mm    RESONANCE: f

□——— WITHOUT CORE
●——— WITH CORE

DETECTION WIDTH

CLEARANCE

EP 0 636 502 B1

# FIG.12

FROM TIRE INTERIOR